# EUROPÄISCHE PATENTSCHRIFT

(11) **EP 1 721 117 B1**
(45) Veröffentlichungstag und Bekanntmachung des Hinweises auf die Patenterteilung: **26.03.2008**
(21) Anmeldenummer: 05707583.0
(22) Anmeldetag: 23.02.2005
(51) Int. Cl.: G01B 5/012, G01B 7/012, G01B 11/00

(54) **TASTKOPF FÜR EIN KOORDINATENMESSGERÄT**
SENSING HEAD FOR A COORDINATE MEASURING DEVICE
TETE DE PALPAGE POUR UN APPAREIL DE MESURE DE COORDONNEES

(30) Priorität: 05.03.2004 DE 102004011729
(43) Veröffentlichungstag der Anmeldung: 15.11.2006
(73) Patentinhaber: Carl Zeiss Industrielle Messtechnik GmbH, 73447 Oberkochen (DE)
(72) Erfinder: ENDERLE, Eckhard, 73434 Aalen (DE); BRENNER, Kurt, 74589 Satteldorf (DE)
(74) Vertreter: Duhme, Torsten
(86) Internationale Anmeldenummer: PCT/EP2005/001859
(87) Internationale Veröffentlichungsnummer: WO 2005/088238

(56) Entgegenhaltungen:
- GB-A- 915 897
- US-A- 4 720 922
- US-A- 5 345 689
- US-A- 5 548 902

## Beschreibung

Die vorliegende Erfindung betrifft einen Tastkopf für ein Koordinatenmessgerät, mit einem feststehenden ersten Teil und einem relativ dazu beweglichen zweiten Teil, wobei das zweite Teil mit einem Tastelement zum Antasten eines Messobjekts koppelbar ist, ferner mit zumindest einem ersten und einem zweiten Verbindungselement, über die das zweite Teil mit dem ersten Teil verbunden ist, wobei jedes Verbindungselement mit einem der Teile über eine erste Kontaktstelle und mit dem anderen Teil über eine zweite Kontaktstelle verbunden ist.

Ein Tastkopf, bei dem die erste Kontaktstelle im Wesentlichen punktförmig und die zweite Kontaktstelle zumindest zweipunktförmig ausgebildet ist, ist aus GB 915 897 bekannt.

Die Erfindung betrifft ferner ein Koordinatenmessgerät zum Vermessen einer Objektform eines Messobjekts, mit einem Verschiebegestell, an dem ein solcher Tastkopf mit einem Tastelement zum Antasten des Messobjekts angeordnet ist, und mit einer Auswerteeinheit, die dazu ausgebildet ist, eine aktuelle Raumposition des Tastelements zu bestimmen.

Gattungsgemäße Koordinatenmessgeräte dienen dazu, die Objektform eines Messobjekts mit hoher Genauigkeit zu vermessen. Eine typische Anwendung ist die. Vermessung von maschinell hergestellten Werkstücken bei der laufenden Qualitätskontrolle in der Produktion. Die Objektform des Messobjekts wird vermessen, indem der Tastkopf über die Verschiebemechanik an definierte Punkte des Messobjekts herangefahren wird und anschließend die aktuelle Position des Tastkopfes bzw. eines mit ihm verbundenen Tastelements bestimmt wird. Bekannt ist es insbesondere, das Messobjekt mit einem am Tastkopf befestigten Taststift anzutasten, um das Auslesen der Raumkoordinaten auszulösen.

Um eine definierte Auslenkung des Taststiftes relativ zu dem Tastkopf zu ermöglichen, wird der Taststift bei gattungsgemäßen Tastköpfen häufig über ein oder mehrere Federparallelogramme aufgehängt. Aus DE 44 24 225 A1 ist es beispielsweise bekannt, drei Federparallelogramme übereinander anzuordnen, wobei jedes Federparallelogramm die Auslenkung in einer Koordinatenrichtung ermöglicht. Die Federparallelogramme besitzen jeweils einen ersten, feststehenden Teil und einen relativ dazu beweglichen, zweiten Teil. (Der erste Teil kann selbst in einer anderen Koordinatenrichtung beweglich sein. Bezogen auf die Koordinatenrichtung des Federparallelogramms ist er jedoch das "feststehende" Element im Sinne der Erfindung.) Die beiden Teile sind über zwei parallel zueinander angeordnete Blattfedern miteinander verbunden, die senkrecht zu dem ersten und zweiten Teil steif sind und die parallel zu dem ersten und zweiten Teil flexibel sind. Damit erlauben die Federparallelogramme eine definierte Auslenkung in einer Koordinatenrichtung.

Derartige Federparallelogramme besitzen allerdings den Nachteil, dass sie den aufgehängten Taststift zusätzlich zu der vorgesehenen Auslenkung noch in einer Querrichtung etwas versetzen. Ursache hierfür ist, dass sich das Federparallelogramm bei der Auslenkung des Taststiftes auf einer bogenförmigen Bahn bewegt, etwa wie ein an zwei Seilen aufgehängtes Pendel.

Um die unerwünschte Querauslenkung zu vermeiden, kann man sog. Doppelfederparallelogramme verwenden, die ein inneres und ein äußeres Federparallelogramm besitzen. Die feststehende Basis ist über das äußere Federparallelogramm mit einem Zwischenelement verbunden, und das Zwischenelement ist über das innere Federparallelogramm mit dem auszulenkenden Element, insbesondere dem Taststift, verbunden. Ein solches Doppelfederparallelogramm ist beispielsweise aus EP 0 299 033 B2 oder aus GB 2 035 564 A bekannt.

Darüber hinaus ist es bei Tastköpfen für Koordinatenmessgeräte bekannt, den Taststift über eine sog. Membranfeder zu lagern, die gewissermaßen eine Kardanebene für den Taststift bildet. Eine solche Anordnung ist beispielsweise aus DE 24 40 692 B1 bekannt. Bei einer solchen Membranfeder wird der Taststift in aller Regel jedoch nur in den zwei Koordinatenrichtungen spürbar ausgelenkt, die parallel zu der Kardanebene liegen, beispielsweise in x- und y-Richtung.

Bei allen bislang bekannten Anordnungen mit Federparallelogrammen und Doppelfederparallelogrammen ist ein hoher Fertigungsaufwand erforderlich. Die einzelnen Bauteile müssen mit sehr hoher Genauigkeit hergestellt und montiert werden. So ist es erforderlich, die Blattfedern der Federparallelogramme (allgemeiner: die Verbindungselemente im Sinne der Erfindung) exakt gleich herzustellen und exakt parallel zueinander auszurichten. Jede Abweichung von der idealen Montage führt zu einem verstärkten Hystereseverhalten, was die Messgenauigkeit des Tastsystems beeinträchtigt. Dies gilt bei Doppelfederparallelogrammen verstärkt, da hier insgesamt vier Blattfederelemente zueinander ausgerichtet werden müssen. Im Extremfall kann eine ungenaue Fertigung und Montage der Blattfederelemente zu einem "Schnappen" führen, was eine genaue Koordinatenmessung praktisch unmöglich macht.

Vor diesem Hintergrund ist es eine Aufgabe der vorliegenden Erfindung, einen Tastkopf der eingangs genannten Art und ein darauf basierendes Koordinatenmessgerät anzugeben, die bei zumindest gleichen Anforderungen an die Messgenauigkeit eine einfachere und damit kostengünstigere Herstellung ermöglichen.

Diese Aufgabe wird mit einem Tastkopf gemäss Anspruch 1 gelöst.

Die erste und zweite Kontaktstelle sind hiernach also unterschiedlich. Die erste Kontaktstellen ist im Wesentlichen punktförmig, d.h. es handelt sich um einen einzelnen (singulären) Befestigungsbereich. Dabei versteht es sich, dass "punktförmig" nicht im exakt mathematischen Sinne als "räumliche Ausdehnung gleich Null" zu verstehen ist, was in der technischen Realität bekanntermaßen nicht möglich ist. Die erste Kontaktstelle besitzt hiernach aber eine Ausdehnung, die klein ist im Vergleich zu der zweiten Kontaktstelle und daher für sich gesehen mehr Freiheitsgrade bietet.

Die zweite Kontaktstelle beinhaltet demgegenüber zumindest zwei Befestigungspunkte, d.h. sie legt mathematisch gesehen eine Befestigungslinie fest. Die Befestigungslinie kann sich auf zwei singuläre Kontaktstellen beschränken, was in einigen Ausführungsbeispielen bevorzugt ist, sie kann aus zahlreichen singulären Kontaktstellen (mehr als zwei) oder sogar als kontinuierliche Befestigungslinie ausgebildet sein.

Im Ergebnis führt die Kombination der ersten und zweiten Kontaktstellen dazu, dass die Verbindungselemente in einer Art Drei-Punkt-Lagerung an den beiden Teilen fixiert sind. Im Gegensatz dazu besitzen die (Doppel")Federparallelogramme bei den bekannten Tastköpfen durchgehend eine Anordnung, die einer Vier-Punkt-Lagerung entspricht. Mit anderen Worten besitzen die bekannten (Doppel-)Federparallelogramme Kontaktstellen, die auf beiden Seiten der Verbindungselemente zumindest zweipunktförmig ausgebildet sind. Dabei sind die Verbindungselemente statisch überbestimmt. Für die Festlegung der Raumebene, in der die Verbindungselemente liegen sollen, genügt es nämlich, drei Befestigungspunkte festzulegen. Die statische Überbestimmung der Verbindungselemente trägt bei den bisherigen (Doppel-) Federparallelogrammen zu der Hysteresebildung und den damit verbundenen Nachteilen bei. Anders ausgedrückt kann die Herstellung und Montage der Verbindungselemente auf Grund der neuen Anordnung mit größeren Toleranzen erfolgen, ohne dass sich die gegeneinander beweglichen Teile verspannen, was im Extremfall zu dem "Schnappen" führen kann.

Die Situation ist in gewissen Grenzen mit einem drei- oder vierbeinigen Stuhl vergleichbar. Ein Stuhl mit drei Beinen mag zwar abhängig vom Untergrund schief stehen, er wackelt jedoch nicht, da seine Lage im Raum durch die drei Aufstandspunkte statisch exakt bestimmt ist. Demgegenüber wackelt ein vierbeiniger Stuhl, wenn die Länge der Beine nicht exakt auf die Unebenheiten des Untergrundes angepasst ist.

Die größeren Toleranzen erlauben bereits von sich aus eine günstigere Herstellung des neuen Tastkopfes. Darüber hinaus benötigt der neue Tastkopf auf Grund der neuen Drei-Punkt-Lagerung weniger Material und er besitzt damit ein geringeres Gewicht, was eine größere Dynamik bei den Bewegungen des Tastkopfes ermöglicht.

Jedes Teil ist über eine erste Kontaktstelle mit einem Verbindungselement und über eine zweite Kontaktstelle mit dem anderen Verbindungselement verbunden.

Mit anderen Worten ist die Anordnung der Teile und Verbindungselemente hier asymmetrisch zueinander. Alternativ hierzu wäre es grundsätzlich auch möglich, beispielsweise das erste Teil nur über erste (punktförmige) Kontaktstellen und das zweite Teil nur über zweite (zweipunktförmige) Kontaktstellen mit den Verbindungselementen zu verbinden. Die asymmetrische Ausbildung, wonach jedes der beiden Teile jeweils eine erste und eine zweite Kontaktstelle mit einem der Verbindungselemente besitzt, führt demgegenüber zu einer Drei-Punkt-Lagerung in Bezug auf alle Teile. Die genannten Vorteile der Drei-Punkt-Lagerung wirken sich daher durchgehend aus; eine statische Überbestimmung ist vollständig vermieden. In Folge dessen erlaubt diese Ausgestaltung nochmals größere Toleranzen bei der Montage. Andererseits kann die Messgenauigkeit des Tastkopfes noch weiter gesteigert werden.

In einer weiteren Ausgestaltung ist die zweite Kontaktstelle aus einer Vielzahl punktförmiger Kontaktbereiche gebildet, insbesondere aus zwei punktförmigen Kontaktbereichen.

Wie den einschlägigen Fachleuten bekannt ist, kann eine Linie im Raum durch die Festlegung von zwei Punkten definiert werden. Zur Realisierung der zweiten Kontaktstelle genügt es daher, zwei singuläre Befestigungspunkte zu verwenden. Diese Ausgestaltung ist fertigungstechnisch noch einfacher und noch unempfindlicher. Zudem erlaubt die damit verbundene Materialeinsparung eine weitere Gewichtsreduktion und damit eine noch größere Dynamik des Tastkopfes.

In einer weiteren Ausgestaltung sind die Verbindungselemente Federelemente, die über die Kontaktstellen an den Teilen so befestigt sind, dass sie ein Federparallelogramm bilden.

Die Anwendung der neuen Drei-Punkt-Lagerung ist bei einem Federparallelogramm besonders bevorzugt, da sich die genannten Vorteile hier besonders auswirken. Darüber hinaus werden Federparallelogramme in der Praxis häufig zum Aufbau von Tastköpfen verwendet. Die genannten Vorteile können daher auf eine Vielzahl von Tastkopfkonzepten übertragen werden. Grundsätzlich ist die Anwendung des neuen Konzepts jedoch nicht allein auf die Federparallelogramme innerhalb des Tastkopfes beschränkt.

In einer weiteren Ausgestaltung sind die Verbindungselemente starr und die Kontaktstellen bieten zumindest einen (bevorzugt gemeinsamen) translatorischen Freiheitsgrad.

Grundsätzlich ist es für eine Auslenkung des Taststiftes in eine Koordinatenrichtung nicht erforderlich, Federparallelogramme, also Elemente mit in einer Richtung elastischen Verbindungselementen, zu verwenden. Das hier beschriebene Konzept der Drei-Punkt-Lagerung kann vielmehr auch bei translatorisch verschieblichen Konstruktionen angewendet werden, beispielsweise wenn die Kontaktstellen in Form von Rollenlagern realisiert sind, die es erlauben, die beiden Teile relativ zueinander in der gewünschten Koordinatenrichtung zu verschieben. Auch in diesem Fall vereinfacht sich die Montage auf Grund der reduzierten Anzahl an Lagerpunkten und den vergrößerten Toleranzen.

In einer weiteren Ausgestaltung besitzt der neue Tastkopf zwei weitere Verbindungselemente sowie ein Zwischenelement, die zusammen mit dem ersten und zweiten Verbindungselement ein Doppelfederparallelogramm bilden.

Doppelfederparallelogramme sind an sich bekannt, wie bereits weiter oben ausgeführt. Auf Grund der erhöhten Teilezahl und der noch engeren Toleranzen wirken sich die Vorteile der Erfindung bei Doppelfederparallelogrammen besonders deutlich aus. Andererseits kann mit Doppelfederparallelogrammen eine verbesserte Messgenauigkeit erreicht werden, so dass die Erfindung nun bei begrenztem Montageaufwand eine erhöhte Messgenauigkeit ermöglicht.

In einer weiteren Ausgestaltung sind das erste und zweite Teil, die Verbindungselemente und das Zwischenelement jeweils über eine erste und eine zweite Kontaktstelle miteinander verbunden.

In dieser Ausgestaltung ist eine Drei-Punkt-Lagerung zwischen allen Elementen des Doppelfederparallelogramms realisiert. Die erfindungsgemäßen Vorteile wirken sich daher besonders deutlich aus.

In einer weiteren Ausgestaltung sind das erste und zweite Teil sowie die Verbindungselemente in einer im Wesentlichen zylindrischen Bauform zueinander angeordnet, wobei die Verbindungselemente quer zu einer Längsachse der zylindrischen Bauform angeordnet sind.

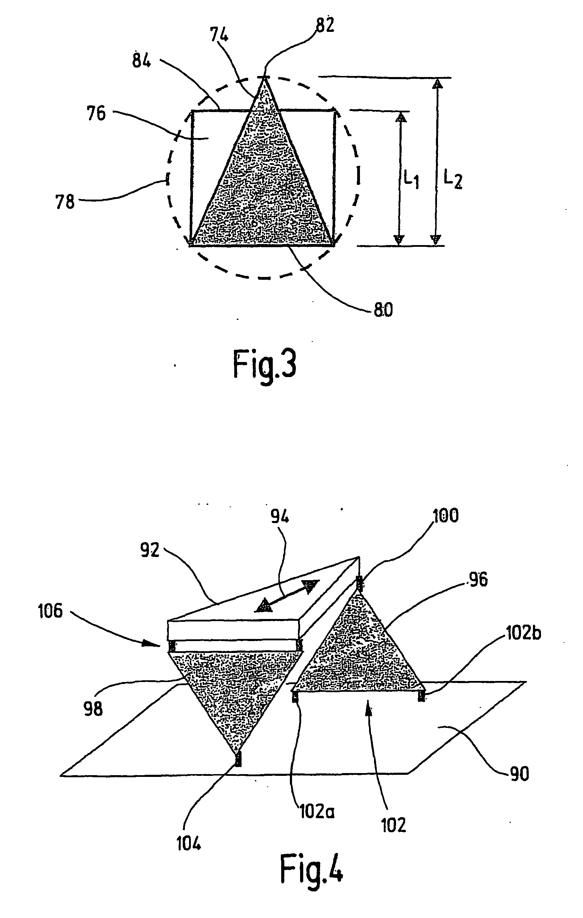

In dieser Ausgestaltung besitzen die beiden Teile und die Verbindungselemente eine besonders kompakte stabile Bauform. Zudem passt die so gebildete Struktur optimal in einen zylindrischen Hüllmantel, der das Gehäuse des Tastkopfes bildet. Ein besonderer Vorteil in dieser Bauform liegt ferner darin, dass die federnde Länge der Verbindungselemente bei gleicher Materialbeanspruchung relativ gesehen größer ist als bei den bislang bekannten Federparallelogrammen mit im Wesentlichen rechteckförmigen Blattfedern (wird nachfolgend an Hand der Fig. 3 und 4 näher ausgeführt). Anders ausgedrückt ermöglicht die erfindungsgemäße Anordnung vor allem bei einer zylindrischen Bauform größere Auslenkwege.

In einer weiteren Ausgestaltung sind die Verbindungselemente im Wesentlichen parallel zueinander angeordnet.

Diese Ausgestaltung ist besonders vorteilhaft, um ein Federparallelogramm mit hoher Messgenauigkeit für den Tastkopf zu realisieren.

In einer weiteren Ausgestaltung besitzt der neue Tastkopf eine Membranfeder, über die das zweite Teil mit dem Tastelement koppelbar ist. Vorzugsweise ist die Membranfeder zwischen dem ersten und zweiten Verbindungselement angeordnet.

Wie oben erwähnt, ist die Verwendung einer Membranfeder bei Tastköpfen für Koordinatenmessgeräte für sich genommen bekannt. In Verbindung mit der vorliegenden Drei-Punkt-Lagerung ermöglicht die Verwendung einer Membranfeder jedoch eine besonders kompakte, insbesondere zylindrische, Bauform. Damit lässt sich durch die Kombination dieser Merkmale ein Tastkopf realisieren, der bei geringen Fertigungskosten eine sehr hohe Messgenauigkeit und Dynamik besitzt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Koordinatenmessgerät mit einem Ausführungsbeispiel des neuen Tastkopfes,
- Fig. 2: ein Ausführungsbeispiel des neuen Tastkopfes in einer teilweise geschnittenen, perspektivischen Darstellung,
- Fig. 3: eine schematische Darstellung zur Erläuterung besonderer Vorteile der Erfindung bei einer zylindrischen Bauform, und
- Fig. 4: eine schematische Darstellung des Grundkonzepts der vorliegenden Erfindung.

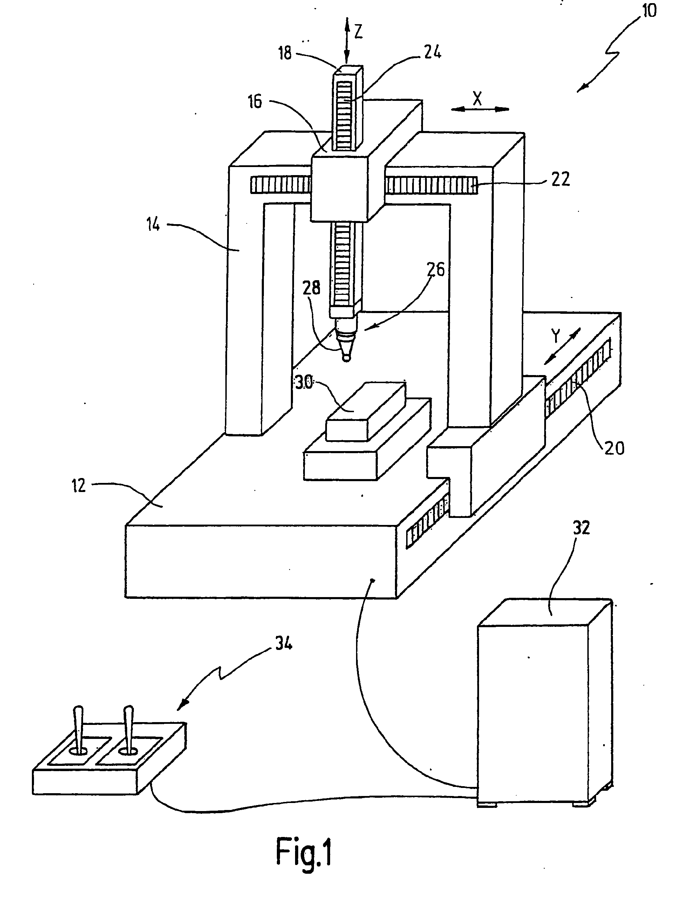

In Fig. 1 ist ein Koordinatenmessgerät in seiner Gesamtheit mit der Bezugsziffer 10 bezeichnet. Das Koordinatenmessgerät 10 besitzt eine Grundplatte 12, auf der ein Portal 14 in einer Längsrichtung verschieblich angeordnet ist. Die Längsrichtung wird üblicherweise als y-Achse bezeichnet. Am oberen Querträger des Portals 14 ist ein in x-Richtung verschieblicher Schlitten 16 angeordnet, der wiederum eine in z-Richtung verstellbare Pinole 18 trägt. Mit den Bezugsziffern 20, 22, 24 sind Skalen bezeichnet, an denen sich die jeweilige Verstellposition des Portals 14, des Schlittens 16 und der Pinole 18 in den drei Raumrichtungen x, y und z ablesen lässt. Die Skalen 20, 22, 24 können dabei typische Messskalen sein, die von einem Bediener des Koordinatenmessgerätes 10 abgelesen werden. Alternativ und/oder ergänzend kann es sich hier jedoch auch um Wegmessgeber handeln, die maschinell ausgelesen werden können.

Am unteren freien Ende der Pinole 18 ist in an sich bekannter Weise ein Tastkopf 26 angeordnet, der einen hier nicht-maßstabsgetreu dargestellten Taststift 28 trägt. Mit dem Taststift 28, der auch eine andere Form als hier dargestellt besitzen kann, werden definierte Messpunkte eines Messobjekts 30 angetastet. Das Messobjekt 30 ist dabei auf der Grundplatte 12 des Koordinatenmessgerätes 10 angeordnet. Die Stellung des Tastkopfes 26 und ggf. des Taststiftes 28 lassen sich an Hand der Skalen 20, 22, 24 und ggf. weiterer, im Tastkopf 26 angeordneter Messelemente (hier nicht dargestellt) bestimmen. Damit kann die Objektform des Messobjektes 30 mit der durch das Koordinatenmessgerät 10 vorgegebenen Genauigkeit vermessen werden.

Mit der Bezugsziffer 32 ist eine Auswerte- und Steuereinheit bezeichnet, über die das Koordinatenmessgerät 10 gesteuert wird. Des Weiteren wertet die Auswerte- und Steuereinheit 32 die jeweilige Position von Tastkopf 26 und Taststift 28 aus, und sie stellt die Messergebnisse zur Dokumentation und/oder weiteren Verarbeitung bereit. Bei automatisch arbeitenden Koordinatenmessgeräten ist die Auswerte- und Steuereinheit 32 häufig eine sogenannte CNC-Steuereinheit.

Mit der Bezugsziffer 34 ist ein Bedienpult bezeichnet, über das das Koordinatenmessgerät 10 hier auch manuell gesteuert werden kann. Steuereinheit 32 und Bedienpult 34 sind hier allerdings lediglich der Vollständigkeit halber dargestellt und können in anderen Ausführungsbeispielen auch entfallen oder durch andere Komponenten ersetzt sein.

Des Weiteren ist das hier in Portalbauweise dargestellte Koordinatenmessgerät 10 nur beispielhaft gewählt. Die Erfindung kann gleichermaßen bei Koordinatenmessgeräten in Horizontalarmbauweise oder auch bei anderen Bauformen Anwendung, finden.

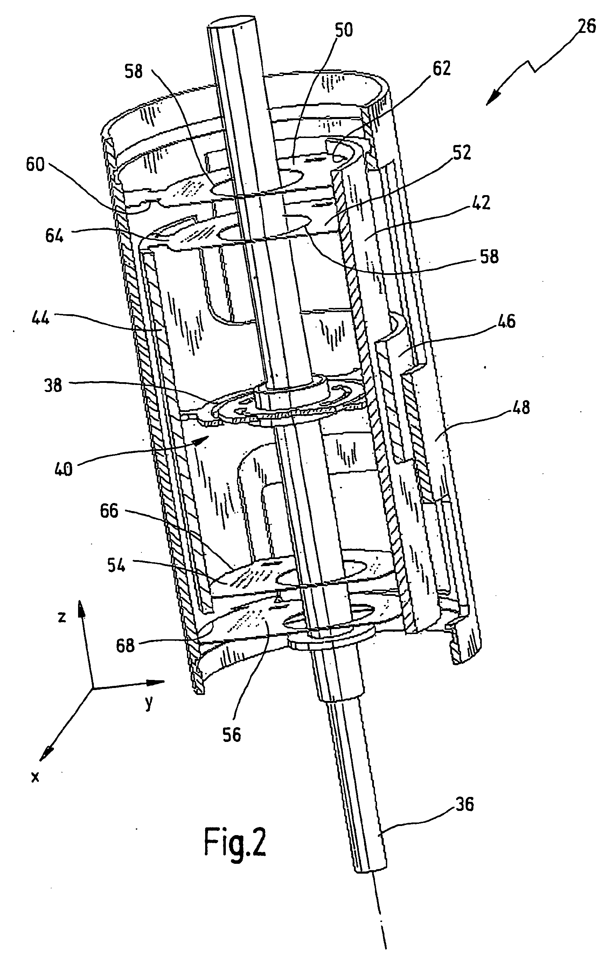

In Fig. 2 ist das sog. Kinematikmodul eines bevorzugten Ausführungsbeispiels des Tastkopfes 26 dargestellt. Das Kinematikmodul umfasst diejenigen Teile, die die kontrollierte Auslenkung des Taststiftes 28 beim Antasten des Messobjekts 30 ermöglichen. Es versteht sich, dass der Taststift 28 nicht unmittelbar mit dem Kinematikmodul verbunden sein muss, sondern in aller Regel über eine Taststiftverlängerung 36 an dem Kinematikmodul angeordnet ist. Dies ermöglicht,es insbesondere, den verwendeten Taststift 28 am Tastkopf 26 auszuwechseln, wie dies an sich bereits von gattungsgemäßen Koordinatenmessgeräten bekannt ist.

Das Kinematikmodul des neuen Tastkopfes 26 besitzt hier eine zylindrische Bauform, in deren Mitte eine Membranfeder 38 angeordnet ist. Die Taststiftverlängerung 36 wird über die Membranfeder 38 so gehalten, dass sich die Taststiftverlängerung 36 (und mit ihr der Taststift 28) sowohl in Richtung der x-Achse als auch in Richtung der y-Achse bewegen (verschwenken) kann.

Die Membranfeder 38 ist in ein Trägerelement 40 eingespannt, das sich in die zylindrische Bauform des Tastkopfes 26 einpasst. Das Trägerelement 40 besitzt einen zylinderhalbschalenförmigen Teil 44, der diametral einem Zwischenelement 42 gegenüber liegt. Außerdem besitzt das Trägerelement 40 einen ringartigen Fortsatz 46, der die Membranfeder 38 und das Zwischenelement 42 ringförmig umgreift. Dabei kann sich das Zwischenelement 42 zwischen der Membranfeder 38 und dem Fortsatz 46 bewegen. In der axialen Ausdehnung ist das Teil 44 kleiner als das Zwischenelement 42 und mittig zu dem Letzteren angeordnet.

Um das Trägerelement 40 herum ist ein zylindrisches Gehäuseteil 48 angeordnet. Das Gehäuseteil 48 umgibt auch die Taststiftverlängerung 36 konzentrisch. Gehäuseteil 48 und die beiden Elemente 40, 42 sind zudem über insgesamt vier Federelemente 50, 52, 54, 56 miteinander verbunden. Die Federelemente 50 bis 56 sind jeweils als Blattfedern ausgebildet und sie liegen parallel zu der Membranfeder 38. Um den Durchtritt der Taststiftverlängerung 36 zu ermöglichen, besitzen die vier Federelemente 50 bis 56 jeweils eine etwa kreisförmige, mittige Ausnehmung 58. Durch diese hindurch erstreckt sich die Taststiftverlängerung 36.

Die Federelemente 50 und 52 sind in Richtung der z-Achse oberhalb der Membranfeder 38 angeordnet. Die Federelemente 54, 56 liegen in Richtung der z-Achse unterhalb der Membranfeder 38, wobei sie in etwa denselben Abstand zu der Membranfeder 38 besitzen wie die Federelemente 50, 52. Das Federelement 50 verbindet das feststehende Gehäuseteil 48 mit dem Zwischenelement 42. Das Federelement 52, das etwas unterhalb des Federelements 50 angeordnet ist, verbindet das Zwischenelement 42 mit dem Teil 44 des Trägerelements 40.

In ähnlicher Weise verbindet das Federelement 54 das Teil 44 des Trägerelements 40 mit dem diametral gegenüberliegenden Zwischenelement 42. Das Federelement 56, das etwas unterhalb des Federelements 54 angeordnet ist, verbindet schließlich das Zwischenelement 42 erneut mit dem feststehenden Gehäuseteil 48. Durch diese Anordnung bilden die Trägerelemente 40, 42 zusammen mit den Federelementen 50 bis 56 ein sog. Doppelfederparallelogramm in zylindrischer Bauform, das eine Auslenkung der Taststiftverlängerung 36 in z-Richtung ermöglicht.

Eine Besonderheit des gezeigten Kinematikmoduls besteht darin, dass die Federelemente 50 bis 56 hier jeweils mit einer Drei-Punkt-Lagerung an den Elementen 40, 42 bzw. dem Gehäuseteil 48 befestigt sind. Anders ausgedrückt sind die Federelemente 50 bis 56 (allgemeiner also die Verbindungselemente im Sinne der Erfindung) mit jeweils einem der Teile über eine punktförmige oder singuläre Kontaktstelle und mit dem jeweils anderen der Teile über eine linien- oder punktlinienförmige Kontaktstelle verbunden. Insbesondere ist das Federelement 50 hier über eine punktförmige Kontaktstelle 60 an dem Gehäuseteil 48 befestigt, während es über eine linienförmige Kontaktstelle 62 an dem Zwischenelement 42 sitzt. Gleichermaßen ist das Federelement 52 über eine linienförmige Kontaktstelle (hier nicht zu sehen) an dem Zwischenelement 42 angeordnet, während es über eine punktförmige/singuläre Kontaktstelle 64 an dem Teil 44 des Trägerelements 40 angreift.

In gleicher Weise ist das Federelement 54 über eine linienförmige Kontaktstelle 66 an dem Trägerelement 40 befestigt, während es über eine punktförmige Kontaktstelle (hier nicht zu sehen) an dem Zwischenelement 42 angreift. Des Weiteren ist auch das Federelement 56 über eine punktförmige/singuläre Kontaktstelle (hier ebenfalls nicht zu sehen) an dem Zwischenelement 42 befestigt, während es über eine linienförmige Kontaktstelle 68 an dem Gehäuseteil 48 angreift.

Die neue Drei-Punkt-Lagerung der Federelemente 50 bis 56 besitzt den Vorteil, dass die einzelnen Federelemente einfacher und mit größeren Toleranzen hergestellt und montiert werden können, ohne dass es zu Verspannungen und im Extremfall zu einem "Schnappen" der Federelemente kommen kann.

Des weiteren ist hier auch die Membranfeder 38 über eine Dreipunktlagerung in das Trägerelement 40 eingespannt.

In Fig.2 sind die Kontaktstellen 62, 66, 68 jeweils als "echte" linienförmige Kontaktstellen dargestellt, d.h. mit einer durchgehenden Befestigungslinie. Abweichend davon ist es in anderen Ausführungsbeispielen bevorzugt, die zweiten Kontaktstellen 62, 66, 68 in Form von zwei singulären/punktförmigen Kontaktbereichen zu realisieren. Dies kann beispielsweise dadurch erreicht werden, dass die Federelemente 50 bis 56 im Bereich der zweiten Kontaktstellen eine schlitzförmige Ausnehmung aufweisen.

Fig. 3 verdeutlicht an Hand einer schematischen Darstellung einen weiteren Vorteil der neuen Drei-Punkt-Lagerung bei einem Tastkopf, der die in Fig. 2 gezeigte zylindrische Bauform besitzt. Zum Vergleich sind zwei schematisch dargestellte Federelemente 74, 76 gezeigt, die in einen kreisförmigen Umfang 78 eingepasst sind. Das Federelement 74 besitzt eine Dreieckform, das Federelement 76 eine quadratische Form. Beide Federelemente 74, 76 besitzen die gleiche Grundlinie, hier mit Bezugsziffer 80 bezeichnet, die eine zweidimensionale Kontaktstelle im Sinne der vorliegenden Erfindung repräsentiert. Die gegenüberliegende Kontaktstelle 82 ist bei dem Federelement 74 punktförmig ausgebildet. Bei dem quadratischen Federelement 76 ist auch die zweite Kontaktstelle 84 linienförmig.

Wie sich aus der Darstellung in Fig. 3 leicht ersehen lässt, besitzt das Federelement 74 zwischen den beiden Kontaktstellen 80, 82 eine größere federnde Länge l₂ als das quadratische Federelement 76. Dessen Länge ist in Fig. 3 mit l₁ bezeichnet.

Die größere federnde Länge l₂ ermöglicht bei gleicher Materialbeanspruchung eine größere Auslenkung. Darüber hinaus ist das Gewicht des Federelements 74 bei gleicher Materialwahl auf Grund der geringeren Flächenausdehnung geringer als bei dem Federelement 76.

Fig. 4 verdeutlicht an Hand einer schematischen Darstellung nochmals das Grundprinzip der vorliegenden Erfindung. Ein feststehendes Teil ist hier mit der Bezugsziffer 90, ein bewegliches Teil mit der Bezugsziffer 92 bezeichnet. Das bewegliche Teil 92 kann sich in Richtung eines Pfeils 94 gegenüber dem feststehenden Teil 90 bewegen. Dazu ist es mit dem feststehenden Teil 90 über zwei Verbindungselemente 96, 98 verbunden, die jeweils eine dreieckige Grundform besitzen. Das Verbindungselement 96 ist mit dem beweglichen Teil 92 über eine erste, punktförmige Kontaktstelle 100 und mit dem feststehenden Teil 90 über eine zweite, zweipunktförmige Kontaktstelle 102 verbunden. Die zweipunktförmige Kontaktstelle 102 ist aus zwei punktförmigen/singulären Kontaktstellen 102a, 102b gebildet.

In gleicher Weise ist das Verbindungselement 98 über eine erste Kontaktstelle 104 mit dem feststehenden Teil 90 und über eine zweite Kontaktstelle 106 mit dem beweglichen Teil 92 verbunden.

Die Kontaktstellen 100 bis 106 können als "echte" Festlager ausgebildet sein und die Verbindungselemente 96, 98 sind dann bevorzugt Blattfederelemente. In dieser Anordnung ergibt sich ein einfaches Federparallelogramm. Alternativ dazu können aber beispielsweise die Kontaktstellen 102 und 104 als Gleit- oder Rollenlager ausgebildet sein, die einen gemeinsamen translatorischen Freiheitsgrad in Richtung des Pfeils 94 besitzen. In diesem Fall können die Verbindungselemente vollständig steif ausgebildet sein.

## Patentansprüche

1. Tastkopf für ein Koordinatenmessgerät (10), mit einem feststehenden ersten Teil (48; 42; 90) und einem relativ dazu beweglichen zweiten Teil (42; 44; 92), wobei das zweite Teil (42; 44; 92) mit einem Tastelement (28; 36) zum Antasten eines Messobjekts (30) koppelbar ist, ferner mit zumindest einem ersten und einem zweiten Verbindungselement (50, 56, 52, 54; 96, 98), über die das zweite Teil (42; 44; 92) mit dem ersten Teil (48; 42; 90) verbunden ist, wobei jedes Verbindungselement (50, 56; 52, 54; 96, 98) mit einem der Teile über eine erste Kontaktstelle (60; 64; 100, 104) und mit dem anderen Teil über eine zweite Kontaktstelle (62, 68; 66; 102, 106) verbunden ist, und wobei die erste Kontaktstelle (60; 64; 100, 104) im Wesentlichen punktförmig und die zweite Kontaktstelle (62, 68; 66; 102, 106) zumindest zweipunktförmig ausgebildet sind, **dadurch gekennzeichnet, dass** jedes Teil mit dem einen Verbindungselement über eine erste, im wesentlichen punktförmige, Kontaktstelle (60; 64; 100, 104) und mit dem anderen Verbindungselement über eine zweite, zumindest zweipunktförmige, Kontaktstelle (62, 68; 66; 102, 106) verbunden ist.

2. Tastkopf nach Anspruch 1, **dadurch gekennzeichnet, dass** die zweite Kontaktstelle (62, 68; 66; 102, 106) aus einer Vielzahl punktförmiger Kontaktbereiche (102a, 102b) gebildet ist, insbesondere aus zwei punktförmigen Kontaktbereichen.

3. Tastkopf nach Anspruch 1 oder 2, **dadurch gekennzeichnet, dass** die Verbindungselemente (50, 56; 52, 54; 96, 98) Federelemente sind, die über die Kontaktstellen (60, 62, 64, 66, 68; 100, 102, 104, 106) so an den Teilen befestigt sind, dass sie ein Federparallelogramm bilden.

4. Tastkopf nach Anspruch 1 oder 2, **dadurch gekennzeichnet, dass** die Verbindungselemente (96, 98) starr sind und dass die Kontaktstellen (100, 102, 104, 106) zumindest einen translatorischen Freiheitsgrad bieten.

5. Tastkopf nach einem der Ansprüche 1 bis 4, **gekennzeichnet durch** zwei weitere Verbindungselemente (52, 54) sowie ein Zwischenelement (42), die zusammen mit dem ersten und zweiten Verbindungselement (50, 56) ein Doppelfederparallelogramm bilden.

6. Tastkopf nach Anspruch 5, **dadurch gekennzeichnet, dass** das erste und zweite Teil (48, 44), die **Verbindungselemente** (50, 52, 54, 56) und das Zwischenelement (42) jeweils über eine erste (60, 64) und eine zweite Kontaktstelle (62, 66, 68) miteinander verbunden sind.

7. Tastkopf nach Anspruch 5 oder 6, **dadurch gekennzeichnet, dass** das zweite Teil einen zylinderhalbschalenförmigen Abschnitt (44) besitzt, der dem Zwischenelement (42) diametral gegenüber liegt.

8. Tastkopf nach einem der Ansprüche 1 bis 7, **dadurch gekennzeichnet, dass** das erste und zweite Teil (48, 42; 42, 44; 90, 92) und die Verbindungselemente (50, 52, 54, 56; 96, 98) in einer im wesentlichen zylindrischen Bauform zueinander angeordnet sind, wobei die Verbindungselemente (50, 52, 54, 56; 96, 98) quer zu einer Längsachse der zylindrischen Bauform angeordnet sind.

9. Tastkopf nach einem der Ansprüche 1 bis 8, **dadurch gekennzeichnet, dass** die Verbindungselemente (50, 52, 54, 56; 96, 98) im Wesentlichen parallel zueinander angeordnet sind.

10. Tastkopf nach einem der Ansprüche 1 bis 9, **gekennzeichnet durch** eine, vorzugsweise zwischen dem ersten und zweiten Verbindungselement (50, 56; 52, 54) angeordnete, Membranfeder (38), über die das zweite Teil (42; 44) mit dem Tastelement (28; 36) koppelbar ist.

11. Koordinatenmessgerät zum Vermessen einer Objektform eines Messobjekts (30), mit einem Verschiebegestell (14, 16, 18), an dem ein Tastkopf (26) mit einem Tastelement (28) zum Antasten des Messobjekts (30) angeordnet ist, und mit einer Auswerteeinheit (32), die dazu ausgebildet ist, eine aktuelle Raumposition des Tastelements (28) zu bestimmen, **gekennzeichnet durch** einen Tastkopf nach einem der Ansprüche 1 bis 10.

## Claims

1. A probe head for a coordinate measuring machine (10), comprising a stationary first part (48; 42; 90) and a second part (42; 44; 92) movable relative to the first part, wherein the second part (42; 44; 92) is configured for being coupled to a sensing element (28; 36) for touching a measurement object (30), further comprising at least a first and a second connection element (50, 56; 52, 54; 96, 98) for connecting the second part (42; 44; 92) to the first part (48; 42; 90), wherein each connection element (50, 56; 52, 54; 96, 98) is connected to one of the parts via a first junction (60, 64; 100, 104) and to the other part via a second junction (62, 68; 66; 102, 106), and wherein the first junction (60; 64; 100, 104) is configured substantially point-shaped and the second junction (62, 68; 66; 102, 106) is at least two-point-shaped, **characterized in that** each part is connected to one connection element via a first substantially point-shaped junction (60; 64; 100, 104) and to the other connection element via a second at least two-point-shaped junction (62, 68; 66; 102, 106).

2. The probe head according to claim 1, **characterized in that** the second junction (62, 68; 66; 102, 106) is formed from a plurality of point-shaped contact areas (102a, 102b), in particular from two point-shaped contact areas.

3. The probe head according to claim 1 or 2, **characterized in that** the connections elements (50, 56; 52, 54; 96, 98) are spring elements which are secured to the parts via the junctions (60, 62, 64, 66, 68; 100, 102, 104, 106) such that they form a spring parallelogram.

4. The probe head according to claim 1 or 2, **characterized in that** the connection elements (96, 98) are rigid and the junctions (100, 102, 104, 106) provide at least one translatory degree of freedom.

5. The probe head according to one of claims 1 to 4, **characterized by** two further connection elements (52, 54) and an intermediate element (42), which form a double spring parallelogram together with the first and second connection elements (50, 56).

6. The probe head according to claim 5, **characterized in that** the first and second part (48, 44), the connection elements (50, 52, 54, 56) and the intermediate element (42) each are connected to one another via a first (60, 64) and a second junction (62, 66, 68).

7. The probe head according to claim 5 or 6, **characterized in that** the second part has a section (44) formed as a half cylinder, which section is diametrically opposed to the intermediate element (42).

8. The probe head according to one of claims 1 to 7, **characterized in that** the first and second part (48, 42; 42, 44; 90, 92) and the connection elements (50, 52, 54, 56; 96, 98) are arranged in a substantially cylindrical form, wherein the connection elements (50, 52, 54, 56; 96, 98) are arranged transverse with respect to a longitudinal axis of the cylindrical form.

9. The probe head according to one of claims 1 to 8, **characterized in that** the connection elements (50, 52, 54, 56; 96, 98) are arranged substantially parallel with respect to each other.

10. The probe head according to one of claims 1 to 9, **characterized by** a membrane spring (38), which in particular arranged is between the first and the second connection element (50, 56; 52, 54), wherein the second part (42; 44) is configured for being coupled to the sensing element (28; 36) via said membrane spring (38).

11. A coordinate measuring machine for measuring an object shape of a measuring object (30), comprising a movable base structure (14, 16, 18), where a probe head (26) having a sensing element (28) for touching the measurement object (30) is arranged, and comprising an evaluation unit (32) which is configured to determine a current spatial position of the sensing element (28), **characterized by** a probe head according to one of claims 1 to 10.

## Revendications

1. Tête de palpage pour un appareil de mesure de coordonnées (10), avec une première partie fixe (48 ; 42 ; 90) et une deuxième partie (42 ; 44 ; 92) mobile par rapport à celle-ci, la deuxième partie (42 ; 44 ; 92) pouvant être accouplée à un élément de palpage (28 ; 36) destiné à palper un objet à mesurer (30), également avec au moins un premier et un deuxième éléments de liaison (50, 56 ; 52, 54 ; 96, 98) par l'intermédiaire desquels la deuxième partie (42 ; 44 ; 92) est reliée à la première partie (48 ; 42 ; 90), chaque élément de liaison (50, 56 ; 52, 54 ; 96, 98) étant relié à une des parties par un premier point de contact (60 ; 64 ; 100, 104) et à l'autre partie par un deuxième point de contact (62, 68 ; 66 ; 102, 106), et le premier élément de contact (60 ; 64 ; 100, 104) étant conçu de façon essentiellement ponctuelle et le deuxième point de contact (62, 68 ; 66 ; 102, 106) étant conçu de manière à avoir la forme d'au moins de deux points, **caractérisée en ce que** chaque partie est reliée au premier élément de liaison par un premier élément de contact essentiellement ponctuel (60 ; 64 ; 100, 104) et à l'autre élément de liaison par un deuxième point de contact (62, 68 ; 66 ; 102, 106) au moins à deux points.

2. Tête de palpage selon la revendication 1, **caractérisée en ce que** le deuxième point de contact (62, 68 ; 66 ; 102, 106) est formé à partir d'une multitude de zones de contact ponctuelles (102a, 102b), en particulier à partir de deux zones de contact ponctuelles.

3. Tête de palpage selon la revendication 1 ou 2, **caractérisée en ce que** les éléments de liaison (50, 56 ; 52, 54 ; 96, 98) sont des éléments élastiques qui sont fixés de telle façon aux pièces par les éléments de contact (60, 62, 64, 66, 68 ; 100, 102, 104 106) qu'ils forment un parallélogramme élastique.

4. Tête de palpage selon la revendication 1 ou 2, **caractérisée en ce que** les éléments de liaison (96, 98) sont rigides et **en ce que** les éléments de contact (100, 102, 104, 106) offrent au moins un degré de liberté de translation.

5. Tête de palpage selon l'une quelconque des revendications 1 à 4, **caractérisée** deux autres éléments de liaison (52, 54) ainsi qu'un élément intermédiaire (42), qui forment conjointement avec le premier et le deuxième éléments de liaison (50, 56) un parallélogramme à double ressort.

6. Tête de palpage selon la revendication 5, **caractérisée en ce que** la première et la deuxième parties (48, 44), les éléments de liaison (50, 52, 54, 56) et l'élément intermédiaire (42) sont toujours reliés les uns aux autres par un premier point de contact (60, 64) et un deuxième point de contact (62, 66, 68).

7. Tête de palpage selon la revendication 5 ou 6, **caractérisée en ce que** la deuxième partie possède une section en forme de demi-coquille cylindrique (44), qui est diamétralement opposée à l'élément intermédiaire (42).

8. Tête de palpage selon l'une quelconque des revendications 1 à 7, **caractérisée en ce que** la première et la deuxième parties (48, 42; 42, 44 ; 90, 92) et les éléments de liaison (50, 52, 54, 56 ; 96, 98) sont disposés les uns par rapport aux autres dans une forme structurelle sensiblement cylindrique, les éléments de liaison (50, 52, 54, 56 ; 96, 98) étant disposés perpendiculairement à un axe longitudinal de la forme structurelle cylindrique.

9. Tête de palpage selon l'une quelconque des revendications 1 à 8, **caractérisée en ce que** les éléments de liaison (50, 52, 54, 56 ; 96, 98) sont disposés sensiblement parallèlement les uns par rapport aux autres.

10. Tête de palpage selon l'une quelconque des revendications 1 à 9, **caractérisée par** un ressort à diaphragme (38), disposé de préférence entre les premier et deuxième éléments de liaison (50, 56 ; 52, 54), par l'intermédiaire duquel la deuxième partie (42 ; 44) peut être accouplée à l'élément de palpage (28 ; 36).

11. Appareil de mesure de coordonnées destiné à la mesure d'une forme d'un objet à mesurer (30), avec un bâti coulissant (14, 16, 18) sur lequel est disposé une tête de palpage (26) avec un élément de palpage (28) destiné à palper un objet à mesurer (30), et avec une unité d'exploitation (32) qui est conçue pour déterminer une position spatiale actuelle de l'élément de palpage (28), **caractérisé par** une tête de palpage selon l'une quelconque des revendications 1 à 10.
